# EUROPEAN PATENT APPLICATION

(11) **EP 0 849 416 A2**
(43) Date of publication of application: **24.06.1998**
(21) Application number: 97830684.3
(22) Date of filing: 17.12.1997
(51) Int. Cl.: E04F 15/00, B32B 21/00

(54) **Flooring strip consisting of a high quality wooden strip and a special multilayer support whose orthogonal fibres prevail with respect to those of the high quality wooden strip**

(30) Priority: 19.12.1996 IT AN960034 U
(71) Applicant: Margaritelli Italia S.p.A., San Venanzo (TR) (IT)
(72) Inventor: Margaritelli, Giuseppe, San Venanzo (TR) (IT)
(74) Representative: Baldi, Claudio

(57) **Abstract**

This patent application concerns a flooring strip consisting of high quality strips and an underlying multi-layer woody support board characterised in that the fibres orthogonal to the fibres of the high quality wood strips prevail in the multi-layer support board.

## Description

This patent application concerns a flooring strip consisting of high quality strips glued over a special multi-layer support in which the woody strips with orthogonal fibres with respect to the overlying high quality wooden strip constitute the major thickness.

Flooring strips consisting of a high quality wooden strip glued on to a multi-layer support plywood board have been manufactured for many years.

These strips are practical and inexpensive; in particular they allow fast and easy laying of a wooden flooring thanks to the finger joints provided on the sides which ensure precise and stable coupling of the strips making up the flooring.

Generally, the multi-layer wooden support board used for these strips consists of layers of alternating fibres in the sense that the layers with fibres parallel to those of the high quality wooden flooring are alternated to the layers with fibres orthogonal to the fibres of the same.

Considering that the different layers are all of the same thickness and that generally they are used in odd numbers (mostly 3 or 5), it is evident that approximately 55-60% of the thickness of a conventional multi-layer board consists of layers with fibres parallel to those of the high quality wooden strip and only the remaining 40-45% consists of layers with fibres parallel to those of the high quality wooden strip, or vice versa.

In any case, this regular alternating of layers with longitudinal and transverse fibres in a multi-layer support board has always been considered as very important in terms of ensuring the dimensional stability of the strip as a whole, intended as its resistance to warping due to humidity, heat or other damaging agents, both longitudinally and transversally. The Company filing this patent application has for many years lead the field in the design and sale of these strips; the company has consequently studied and tested these strips in order to improve their characteristics and performance.

Thanks to this research work and testing, the Company has realised the invention of this patent application.

In particular the invention concerns the specific structure of the multi-layer board which supports the high quality wooden strip and consists of realising this support board with a significant prevalence of woody layers having fibres which are orthogonal to those of the high quality wooden strip with respect to the woody layers having fibres parallel to those of the high quality wooden strip in question.

More specifically it can be stated that while in prior conventional techniques the thickness of a multi-layer support board is composed for more than 50% by layers with transverse fibres and for just less than 50% by layers with longitudinal fibres (or vice versa), thanks to this invention, the thickness of the multi-layer support board is now composed for some 80-85% of layers with fibres orthogonal to those of the high quality wooden strip and only the remaining 30-15% is composed by layers with fibres parallel to those of the high quality wooden strip.

This prevalence in the multi-layer support board, of the layers with fibres orthogonal to those of the high quality wooden strip, is determining in terms of optimising the mechanical behaviour of a flooring strip in particular with respect to its dimensional stability and planarity and consequently also in terms of optimising the mechanical behaviour of the entire flooring realised with strips according to the invention.

There is no doubt in any case, that the dimensional stability and planarity of the new strip in question are far superior to those of strips realised with conventional techniques.

It is interesting to note moreover that the woody layers making up the upper and lower surfaces of the multi-layer board used on the new strip in question must necessarily have fibres orthogonal to those of the high quality wooden strip.

This means quite obviously that the woody layer or layer with fibres parallel to those of the high quality strip must always be fitted in an internal and intermediate position with respect to the above outer layers with orthogonal fibres.

In addition, in order to realise the new strip it is not necessary to use woody layers having the same thickness (as generally occurs with the prior technique); in particular, woody layers with orthogonal fibres having a thickness superior to that of the woody layers with fibres parallel to the fibres of the high quality strip could be used.

Moreover an even or odd number of woody layers can be used, provided there are more than two layers.

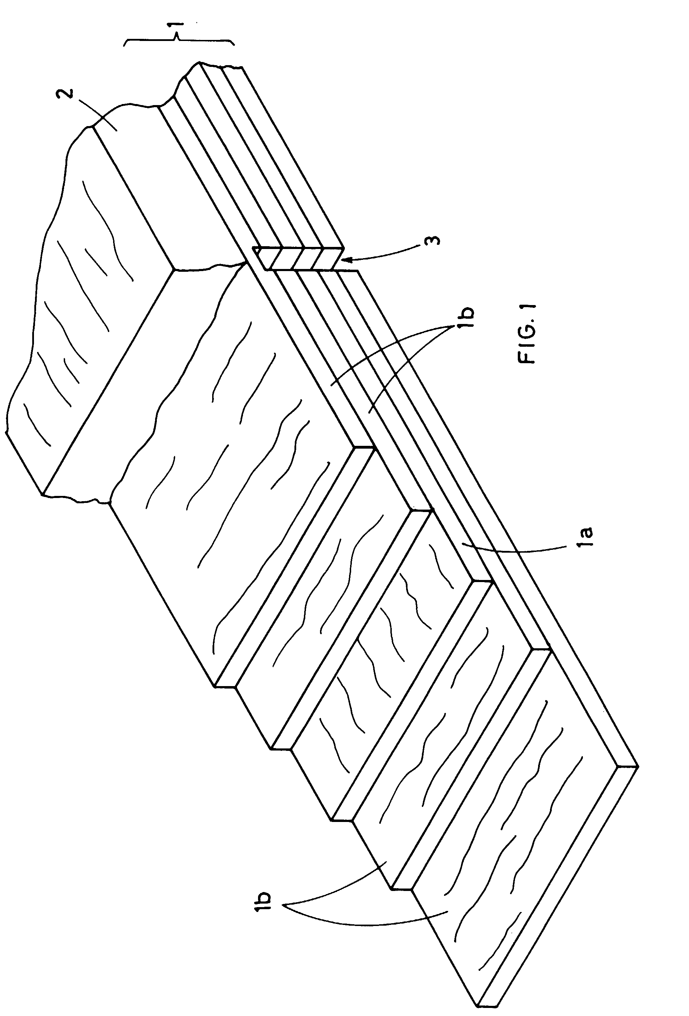

For major clarity, the description of the invention continues with reference to the enclosed drawing which is intended for purposes of illustration and not in a limiting sense where figure 1 is an axonometric view of the strip according to the invention with some of the woody layers partially removed in order to illustrate the multi-layer structure.

With reference to the enclosed drawing, the strip according to the invention consists of a multi-layer wooden board (1) on which a high quality wooden strip (2) is glued, and which in the embodiment illustrated, has longitudinal fibres.

As mentioned previously, the multi-layer board (1) used in the strip according to the invention has two particular characteristics; the first is represented by the fact that its thickness is composed for some 70-85% by woody strips having fibres orthogonal to the fibres of the high quality strips; the second is represented by the fact that its external layers (namely the upper and bottom layers) must have fibres which are orthogonal to those of the overlying high quality wooden strip (2).

In particular in the strip version illustrated in figure 1, the multi-layer board (1) is provided with five layers having an identical thickness of which only the middle layer (1a) has longitudinal fibres which are therefore parallel to the fibres of the high quality strip (2) while the other four layers (1b), two above and two under the same, all have transverse fibres which are therefore orthogonal to the fibres of the high quality strip (2).

In the drawing the number (3) refers to a number of transverse grooves realised from bottom to top on the multi-layer structure of the board (1) in order to make the strip according to the invention more resistant as a whole to warping.

Finally, it should be noted that the sides of the strip according to the invention, as in the case of conventional techniques, must be provided with finger joints which are not illustrated in the enclosed drawing - in order to join identical strips together.

## Claims

1. A flooring strip of the type consisting of a high quality wooden strip (2) glued on a multi-layer support board (1) characterised in that the thickness of said multi-layer support panel (1) is composed for some 70-85% by woody layers (1b) having fibres orthogonal to the fibres of the high quality wooden strip (2) and in that the external layers of said multi-layer panel (1) ) have fibres which are orthogonal to those of the above high quality wooden strip (2).

2. A flooring strip according to claim 1) characterised in that the woody layers of the multi-layer support board (1) ) are in even numbers, provided there are more than two layers.

3. A flooring strip according to claim 1) characterised in that the woody layers of the multi-layer support board (1) ) are in odd numbers.

4. A flooring strip according to claim 1) characterised in that the woody layers of the multi-layer support board (1) all have the same thickness.

5. A flooring strip according to claim 1) characterised in that the woody layers of the multi-layer support board (1) ) have differentiated thicknesses.

6. A flooring strip according to claims 1) and 5) characterised in that the woody layers of the multi-layer support board (1) is provided, from bottom to top, with transverse grooves (3).
